**Europäisches Patentamt**

**European Patent Office**

**Office européen des brevets**

(19)

(11) Numéro de publication : **0 592 321 A1**

(12) ## DEMANDE DE BREVET EUROPEEN

(21) Numéro de dépôt : **93402478.7**

(22) Date de dépôt : **08.10.93**

(51) Int. Cl.⁵ : **G01C 19/56**

(30) Priorité : **09.10.92 FR 9212384**

(43) Date de publication de la demande :
**13.04.94 Bulletin 94/15**

(84) Etats contractants désignés :
**DE ES GB IT**

(71) Demandeur : **METRAVIB R.D.S. Société
Anonyme**
**64, Chemin des Mouilles B.P. 182**
**F-69132 Ecully Cédex (FR)**

(71) Demandeur : **Société Anonyme dite: REGIE
NATIONALE DES USINES RENAULT**
**34, quai du Point du Jour**
**F-92109 Boulogne Billancourt (FR)**

(72) Inventeur : **Permuy, Alfred**
**METRAVIB R.D.S., B.P. 182, 64 Chemin Des
Mouilles**
**F-69132 Ecully Cédex (FR)**

(54) **Gyromètre à détection et excitation coplanaires.**

(57)   — L'objet de l'invention concerne un capteur de mesure comprenant :

. au moins un élement de mesure (**10**) conducteur de l'électricité,

. un système d'excitation (**30** ou **50**) de l'élément de mesure, selon le plan de vibration comprenant une source de courant (**31**) alimentant l'élément de mesure et au moins un couple de pièces d'excitation magnétique (**32, 33**) ou capacitive (**51, 52**) comportant des faces actives planes (**32a, 33a** ou **51a, 52a**),

. et un système (**30** ou **50**) de détection de l'effet de la force de Coriolis.

— Selon l'invention, le système de détection (**30** ou **50**) comprend, en combinaison avec les pièces d'excitation magnétique (**32, 33**) ou capacitive (**51, 52**), au moins un couple de pièces de détection respectivement capacitive (**51, 52**) ou magnétique (**32, 33**) montées parallèlement aux pièces d'excitation, afin d'assurer la détection de la variation du champ magnétique ou électrique sous l'effet de la force de Coriolis appliquée à l'élément de mesure en vue de permettre la mesure d'une vitesse angulaire.

FIG.2

EP 0 592 321 A1

Jouve, 18, rue Saint-Denis, 75001 PARIS

La présente invention concerne le domaine technique des dispositifs appelés gyromètres destinés à être montés sur un mobile au sens général, tel qu'un avion ou une automobile, afin de déterminer la vitesse angulaire de ce mobile.

L'invention vise, plus précisément, les gyromètres autres que ceux du type optique à laser, à savoir les gyromètres mécaniques utilisant l'effet Coriolis.

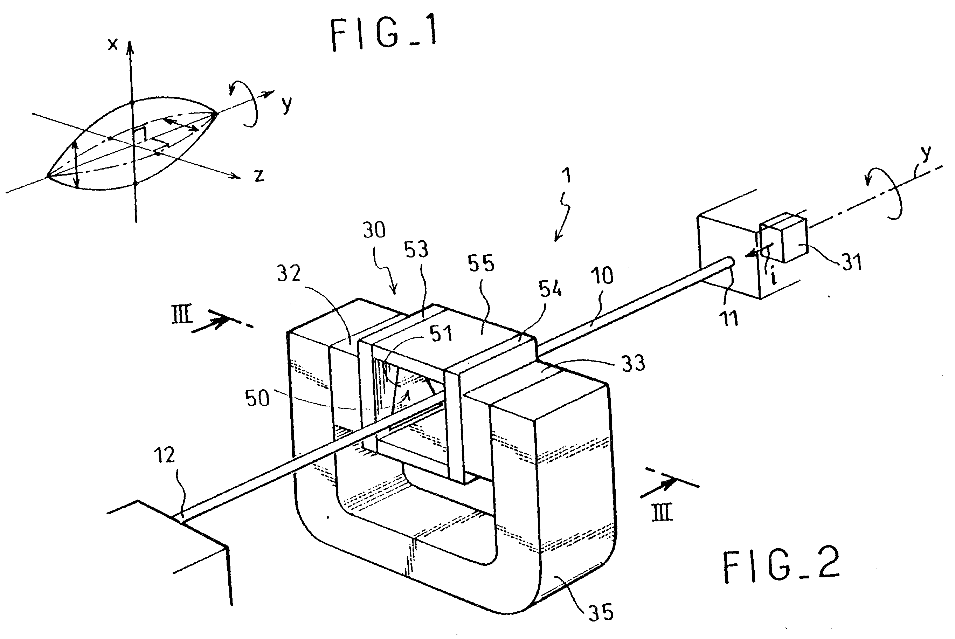

Tel que cela ressort plus précisément de la **fig. 1,** un tel capteur de vitesse angulaire comporte un élément de mesure soumis à une excitation selon un axe **x** et destiné à subir une rotation selon un axe coplanaire y perpendiculaire à l'axe d'excitation **x**. L'élément de mesure est destiné à être mis en vibration par un système d'excitation approprié, selon un plan contenant les axes d'excitation **x** et de rotation **y**. Lorsque l'élément de mesure subit une rotation autour de l'axe **y**, il apparaît la force de Coriolis selon un axe **z** perpendiculaire au plan **(x, y)**. L'effet de cette force proportionnelle à la rotation subie par l'élément de mesure, est décelé par un système de détection approprié.

De nombreux gyromètres utilisent le principe rappelé ci-dessus.

Une catégorie connue de gyromètre concerne ceux du type acoustique consistant à mettre en oeuvre une cavité dans laquelle une onde de pression est générée par un haut-parleur. L'onde acoustique qui se propage selon l'axe **x**, entraîne par l'effet Coriolis lors de la rotation de la cavité selon l'axe **y**, l'apparition d'un gradient de pression selon l'axe **z** qui est mesuré par une paire de microphones. Les inconvénients majeurs de ce type de gyromètre tiennent principalement à sa grande sensibilité aux vibrations sonores parasites, à sa sensibilité thermique et aux difficultés de construction de la cavité.

Une autre catégorie connue de gyromètre concerne ceux mettant en oeuvre au moins une poutre de flexion. Ce type de gyromètre, décrit par exemple dans le brevet **US-A-4 628 734,** consiste à faire vibrer une poutre encastrée et à détecter la vibration perpendiculaire induite par la rotation s'établissant selon un axe parallèle à la poutre. La détection de cette vibration est effectuée par une poutre colinéaire connectée à la première poutre et présentant une inertie de flexion moindre et, par suite, une sensibilité maximale dans une direction perpendiculaire à la direction de flexion de la première poutre.

Ces poutres sont, avantageusement, réalisées en un matériau ferroélectrique et piézoélectrique. Afin de maximiser la composante de vitesse de la première poutre, cette dernière est excitée à la première fréquence de résonance de la structure dans le plan **(x, y)**. Lorsque le capteur subit une rotation, la poutre connectée est mise en vibration par l'effet Coriolis dans le plan **(y, z)**. Afin de maximiser la réponse, il est prévu d'assurer par construction, la coïncidence de la première fréquence de résonance dans le plan **(y, z)** avec la précédente. Il en résulte un facteur d'amplification entre les mouvements vibratoires dans les deux plans, égal au facteur de qualité de cette dernière résonance.

Cette catégorie de gyromètres, qui utilise un élément de mesure constitué par une poutre vibrante, présente un inconvénient tenant au montage de la poutre et à l'ajustement en coïncidence des fréquences de résonance dans les deux plans perpendiculaires. Il convient, en effet, de rappeler que plus le facteur d'amplification est grand, plus la bande passante des résonances est faible. Il s'ensuit qu'il est nécessaire de maîtriser parfaitement la géométrie, les interfaces et les propriétés des matériaux constitutifs des poutres pour avoir un recouvrement des bandes passantes.

Par ailleurs, le principe de détection impose de maîtriser parfaitement l'orthogonalité entre les deux poutres. Un défaut d'orthogonalité se traduit par une contribution parasite du mode vibrant **(x, y)** sur le mode excité **(y, z)**, ce qui est interprété de manière erronée, comme résultant de l'effet Coriolis. La résolution en est d'autant limitée. Or, il apparaît difficile, voire impossible, d'effectuer simplement un positionnement orthogonal convenable entre les deux poutres typiquement meilleur que la minute d'angle.

Il est connu, également, dans l'état de la technique, divers instruments gyroscopiques permettant de définir une direction déterminée.

Ainsi, le brevet **US-A-2 546 158** décrit un instrument gyroscopique comprenant une corde apte à vibrer dans un plan et destinée à subir une rotation selon son axe. La corde vibrante est soumise à un système d'excitation comportant une source de courant alimentant la corde et un couple de pièces d'excitation magnétique placées en vis-à-vis et de part et d'autre de la corde. L'instrument gyroscopique comporte, également, un système de détection de l'effet de la force de Coriolis, s'établissant selon un axe perpendiculaire au plan de vibration et apparaissant lorsque la corde subit une rotation autour de son axe.

Par exemple encore, le brevet **US-A-3 538 774** a décrit, également, un appareil gyroscopique mettant en oeuvre une corde vibrante fixée à ses extrémités. L'appareil comporte, d'une part, un système d'excitation formé de deux électrodes parallèles, disposées de part et d'autre de la corde et, d'autre part, un système de détection composé de deux armatures parallèles s'étendant dans un plan perpendiculaire aux électrodes d'excitation.

Il doit tout d'abord être considéré que ces brevets concernent des appareils gyroscopiques ne prévoyant pas la détection de la vitesse angulaire du mobile sur lequel de tels appareils sont installés. De plus, de tels appareils ne sont pas en mesure de résoudre le problème posé relatif à la maîtrise de l'orthogonalité entre le système d'excitation et le système de détection, de manière à assurer une bonne détection de l'effet Coriolis.

La présente invention vise à remédier aux inconvénients énoncés ci-dessus en proposant un gyromètre comportant un système d'excitation et un système de détection, adaptés pour permettre d'atteindre une résolution de l'ordre du degré par seconde, tout en autorisant la fabrication du capteur à un coût relativement bas.

Pour atteindre cet objectif, le capteur de mesure d'une vitesse angulaire comprend :

- au moins un élément de mesure conducteur de l'électricité soumis à une excitation selon un axe et destiné à subir une rotation selon un axe coplanaire perpendiculaire à l'axe d'excitation, de sorte que l'élément de mesure vibre dans un plan contenant lesdits axes,
- un système d'excitation de l'élément de mesure, selon le plan de vibration, comprenant une source de courant alimentant l'élément de mesure et au moins un couple de pièces d'excitation magnétique ou capacitive comportant des faces actives planes, respectivement placées en vis-à-vis et de part et d'autre de l'élément de mesure, en s'étendant parallèlement entre-elles suivant l'axe de rotation, un champ magnétique ou électrique s'établissant entre les faces actives des pièces, en vue d'exciter l'élément de mesure en combinaison avec le courant qui le parcourt,
- et un système de détection de l'effet de la force de Coriolis s'établissant selon un axe perpendiculaire au plan de vibration et apparaissant lorsque l'élément de mesure subit une rotation selon son axe.

Selon l'invention, le système d'excitation comprend, en combinaison avec les pièces d'excitation magnétique ou capacitive, au moins un couple de pièces de détection, respectivement capacitive ou magnétique, montée parallèlement aux pièces de détection, afin d'assurer la détection de la variation du champ magnétique ou électrique sous l'effet de la force de Coriolis appliquée à l'élément de mesure, en vue de permettre la mesure d'une vitesse angulaire.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est un schéma illustrant le principe de la détection d'une vitesse angulaire par effet Coriolis.

La **fig. 2** est une vue schématique en perspective illustrant un exemple de réalisation d'un gyromètre conforme à l'invention.

La **fig. 3** est une vue en coupe transversale d'un gyromètre selon l'invention, prise sensiblement selon les lignes III-III de la **fig. 2**.

Les **fig. 4** et **5** sont des schémas électriques illustrant des variantes de réalisation du système d'excitation du capteur selon l'invention.

La **fig. 6** est une vue schématique en perspective illustrant un exemple de réalisation du gyromètre conforme à l'invention, selon la technique des circuits imprimés électroniques.

La **Fig. 7** est une coupe-élévation montrant un détail caractéristique de l'invention.

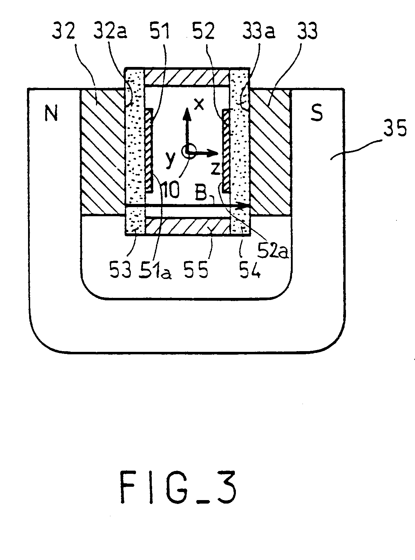

Tel que cela apparaît plus précisément aux **fig. 2** et **3**, le capteur ou gyromètre **1**, selon l'invention, comporte :

- au moins un élément de mesure **10** soumis à une excitation selon un axe **x** et destiné à subir une rotation selon un axe **y** perpendiculaire à l'axe **x**, de sorte que l'élément de mesure vibre dans le plan contenant les axes **(x, y)**,
- un système **30** d'excitation de l'élément de mesure **10** selon le plan **(x, y)**,
- et un système **50** de détection de l'effet de la force de Coriolis s'établissant selon l'axe **z** perpendiculaire aux axes **x** et **y** et apparaissant lorsque l'élément de mesure **10** subit une rotation selon l'axe **y**.

L'élément de mesure **10** peut être constitué par une partie présentant un ou deux axes de symétrie ou, de préférence par une corde vibrante. L'élément de mesure **10** est fixé entre deux points **11** et **12**. L'élément de mesure est, habituellement, réalisé en un matériau conducteur de l'électricité ou rendu artificiellement comme tel.

Selon une caractéristique de l'invention, le capteur selon l'invention comprend un système d'excitation **30** comprenant une source de courant **31** alimentant l'élément de mesure **10** par un courant i de nature alternative. Le système d'excitation **30** comprend, également, au moins un couple de pièces polaires **32**, **33** comportant chacune une face active plane **32a**, **33a** s'étendant parallèlement au plan **(x, y)**. Les faces actives **32a**, **33a** sont placées en vis-à-vis et de part et d'autre des éléments de mesure, en s'étendant parallèlement entre elles. Dans l'exemple illustré, les pièces polaires **32** et **33** assurent, entre leur face transversale **32a** et **33a**, l'établissement d'un champ magnétique **B** créé par un aimant **35**. Avantageusement, les pièces polaires **32** et **33**, qui sont en contact chacune avec un pôle opposé de l'aimant **35**, sont réalisées en un matériau ferromagnétique doux à forte perméabilité. Il s'ensuit que par continuité à l'interface, les lignes de champ qui sortent des pièces polaires ont une direction perpendiculaire aux faces planes **32a**, **33a**. Les lignes du champ magnétique **B** sont ainsi parallèles à l'axe **z**. Les lignes du champ magnétique **B** s'étendent selon l'axe **z** perpendiculaire à l'élément de mesure **10** qui est parcouru par un courant **i**, engendrant une vibration de l'élément de mesure **10** dans le plan **(x, y)** par l'effet de la force de Laplace qui s'exerce selon l'axe **x**.

De préférence, le système d'excitation **30** est placé sensiblement dans la région médiane de l'élément de mesure **10** et sur une certaine étendue, de façon à approprier le premier mode de résonance de l'élément de mesure. Avantageusement, pour s'affranchir d'un quelconque défaut de parallélisme entre les faces **32a** et **33a** des pièces polaires, il peut être prévu de placer l'élément de mesure **10**, soit dans le plan de symétrie des faces, comme cela ressort plus précisément de la **fig. 3**, soit à proximité de l'une des faces actives des pièces polaires.

Il est à noter que dans l'exemple décrit ci-dessus, l'excitation magnétique est obtenue en faisant circuler un courant alternatif **i** dans l'élément de mesure **10** placé dans un champ magnétique **B** fixe. Bien entendu, il peut être prévu de faire circuler un courant constant **i** dans l'élément de mesure et de placer ce dernier dans un champ magnétique **B** alternatif, en vue toujours d'obtenir une vibration de l'élément de mesure par l'effet d'une force de Laplace alternative.

Selon une caractéristique de l'invention, il doit être considéré que le champ d'induction **B** donne la direction selon laquelle s'établit la force de Coriolis. Il en résulte qu'il peut être prévu de mettre en oeuvre des éléments de détection plans placés parallèlement aux faces planes externes des pièces polaires **32, 33**. Le système de détection **50** comporte ainsi au moins une, et dans l'exemple illustré, deux armatures **51, 52** dont les faces actives **51a, 52a** sont placées parallèlement, respectivement, aux faces **32a** et **33a** des pièces polaires. Ces armatures permettent de mesurer la variation du champ électrique induite par la vibration de l'élément de mesure, selon l'axe **z**, sous l'effet de la force de Coriolis due à une rotation selon l'axe **y**. Selon une forme de réalisation avantageuse, les armatures planes **51, 52** sont fixées sur les faces externes planes **32a, 33a** des pièces polaires par l'intermédiaire de supports **53, 54** assurant une isolation électrique entre les pièces polaires et les armatures. De préférence, les supports **53, 54** sont réalisés par des circuits imprimés sur lesquels sont réalisées les armatures **51, 52** , et un circuit électronique de mesure non représenté, relié aux armatures.

La sélectivité de la détection de l'effet de la force de Coriolis dans le plan **(y, z)** est ainsi inversement proportionnel au sinus de l'angle de défaut de parallélisme entre les armatures **51, 52** et les faces actives **32a, 33a** des pièces polaires délivrant le champ magnétique **B**. Bien évidemment, si l'élément de mesure **10** est positionné à proximité de l'une des faces **32a, 33a**, il est clair que seul ce dernier joue un rôle actif pour la détection. L'angle est minimisé en assurant le parallélisme, d'une part, des faces respectives des armatures en choisissant des supports **53, 54** d'épaisseur constante et, d'autre part, des faces actives **32a, 33a** des pièces polaires, réalisé au cours de l'assemblage. Il peut ainsi être obtenu une sélectivité supérieure à **10⁴** permettant une résolution en vitesse de rotation meilleure que le degré par seconde.

Le gyromètre décrit ci-dessus présente une excitation magnétique par la force de Laplace et une détection capacitive de l'effet de Coriolis. A cet effet, les armatures **51, 52** recueillent des tensions alternatives d'amplitudes complexes respectives $V_1$ et $V_2$, à la fréquence de résonance de l'élément de mesure. Pour des armatures planes **51, 52**, présentant des faces en vis-à-vis de forme rectangulaire, le mode différentiel $(V_1-V_2)/2$ est proportionnel, en petits mouvements, à l'amplitude de la vibration induite par effet Coriolis.

De préférence, les armatures **51, 52** présentent chacune un profil variable, par exemple de forme triangulaire ou trapézoïdale, afin de permettre de discriminer les composantes du mouvement vibratoire respectivement parallèle **(x, y)** et perpendiculaire **(y, z)** aux pièces polaires, par séparation des potentiels respectivement de mode commun et différentiel, induits sur ces armatures. Si les armatures recueillent des tensions alternatives $V_{1'}$ et $V_{2'}$, à la fréquence de résonance de l'élément de mesure, le mode différentiel $(V_{1'}-V_{2'})/2$ est proportionnel à la vibration induite par effet Coriolis dans le plan **(y, z)**, tandis que le mode commun $(V_{1'}+V_{2'})/2$ est proportionnel à la vibration de l'élément de mesure excité dans le plan **(x, y)**.

La sélectivité de la détection de l'effet Coriolis par ce procédé est liée à la qualité d'alignement des deux armatures planes **51, 52** selon les axes **x** et **y**. Ce défaut d'alignement se traduit par des décalages des points de repos des signaux délivrés en mode commun et en mode différentiel. Ces signaux peuvent être ramenés à une valeur nulle par un réglage initial. La qualité géométrique de l'alignement de telles armatures doit, néanmoins, être telle que le couplage entre le mode commun et le mode différentiel reste inférieur à $10^{-4}$ pour assurer au gyromètre la résolution souhaitée. La géométrie des armatures fait que ce couplage n'est que du deuxième ordre vis-à-vis du défaut relatif d'alignement. Il en résulte que l'alignement selon l'axe **x** doit être meilleur que le pourcent de l'écartement entre les armatures.

Selon une caractéristique avantageuse de l'invention, l'élément de mesure présente une symétrie de révolution et donc des modes de vibration plans, de fréquences confondues à un ordre donné. En particulier, en excitant l'élément de mesure sur sa première fréquence de résonance dans le plan **(x, y)**, la réponse à l'effet de Coriolis s'effectue selon le mode perpendiculaire dans le plan **(y, z)** également en situation de résonance. Dans ces conditions, les rapports d'amplitudes complexes du mode de réponse **Xc** au mode excité **Xe** sont tels que :

$$(Xc/Xe) = Q. (\Omega_{/}\omega_1)$$

avec:
- $\Omega$, : vitesse de rotation selon l'axe **y**,
- $\omega_1$: pulsation de résonance des modes d'ordre 1 (de l'ordre de $6.10^3 s^{-1}$),
- **Q** : coefficient de surtension de ces modes.

La coïncidence des fréquences de résonances assure ainsi avantageusement, par principe même, un gain de sensibilité égal au coefficient de surtension des modes, réglé typiquement autour de 50. Un autre avantage d'utiliser ce rapport pour la mesure réside, par ailleurs, dans le fait qu'il est possible de s'affranchir de la variation thermique du champ d'induction délivré par l'aimant.

Pour conserver cet avantage de sensibilité, il convient donc de caler continuellement et, par suite, automatiquement, la fréquence d'excitation sur cette fréquence de résonance, et cela, quelles que soient les causes inévitables de variation de cette fréquence. La cause principale de la dérive de cette fréquence est due à la variation thermique des caractéristiques de l'élément de mesure.

Une manière d'assurer ce calage consiste à produire le courant variable parcourant l'élément de mesure, à l'aide d'un amplificateur placé dans une boucle de réaction commandée par le signal de vitesse vibratoire de l'élément de mesure. Un signal proportionnel à cette vitesse consiste en la force contre-électro-motrice induite aux bornes du fil, elle-même proportionnelle à la vitesse de variation du flux électromagnétique dans la boucle fermée incluant l'élément de mesure.

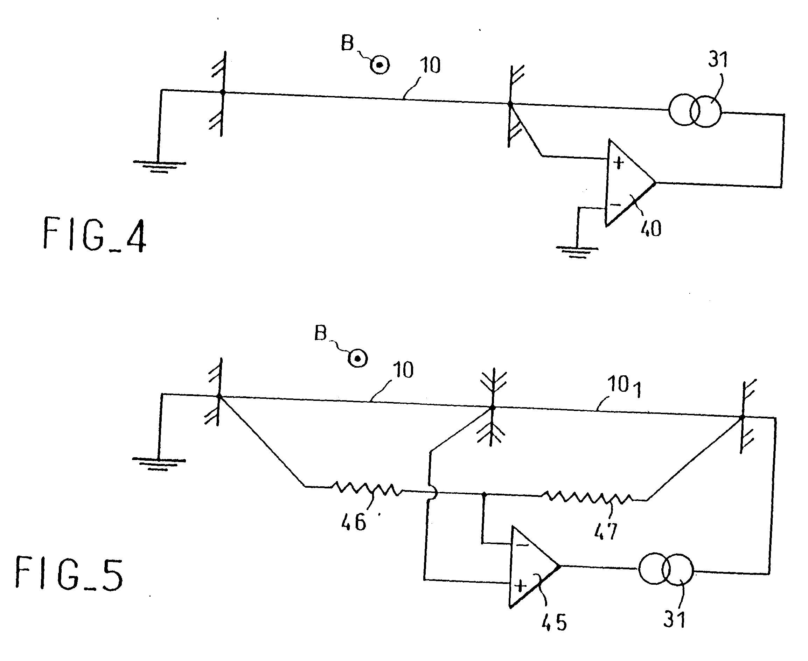

La **fig. 4** illustre ce schéma de principe permettant d'obtenir un tel calage de la fréquence d'excitation sur celle de résonance. L'une des extrémités de l'élément de mesure **10** est placé à la masse, tandis que l'autre extrémité est reliée à l'entrée positive d'un amplificateur **40**, dont l'entrée négative est placée à la masse. La sortie de l'amplificateur **40** est reliée à la borne positive par l'intermédiaire d'une source de courant **31**.

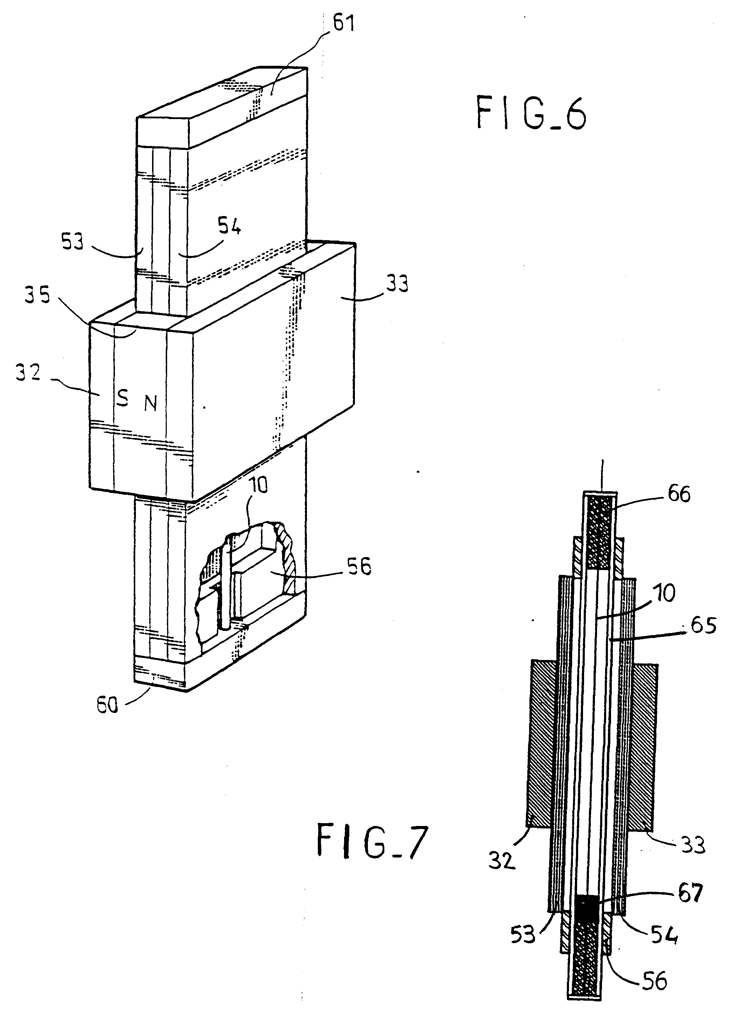

La **fig. 5** donne, à titre d'exemple, un schéma permettant de s'affranchir des effets de résistance et de self inductance de l'élément de mesure et d'accroître ainsi la sélectivité dans la boucle, du pic de résonance couplé de l'élément de mesure. Selon cet exemple, il est prévu d'utiliser un deuxième élément de mesure $10_1$ inerte, strictement identique à l'élément de mesure **10** mais non soumis à l'induction magnétique **B**. L'une des extrémités de l'élément de mesure **10** est reliée à la masse et à l'entrée négative d'un amplificateur **45** par l'intermédiaire d'une résistance **46**. L'autre extrémité de l'élément de mesure **10** est reliée à l'entrée positive de l'amplificateur **45**. L'élément de mesure $10_1$ est connecté par ses extrémités à l'entrée positive de l'amplificateur et à l'extrémité négative de l'amplificateur **45** par une résistance **47**. L'amplificateur **45** de commande du courant est relié, par la source de courant **31**, au point commun entre la résistance **47** et une extrémité de l'élément de mesure $10_1$.

Il est à noter qu'il est possible d'utiliser le signal de mode commun des armatures **51, 52** à profil variable, ou toute autre électrode, pour accéder à la vitesse de vibration de l'élément de mesure, selon le mode d'excitation **(x, y)**. Dans ce cas, le courant induit dans les armatures fournit une image de la vitesse vibratoire. Un tel signal peut être utilisé pour commander, de la même façon que décrit précédemment, un amplificateur de courant alimentant l'élément de mesure.

La **fig. 6** illustre une variante de réalisation d'un gyromètre selon l'invention, utilisant la technique des circuits imprimés électroniques en verre époxy. Ce gyromètre comporte deux plaques **53, 54** de circuit imprimé sur lesquelles sont photogravées les armatures **51, 52**. Les plaques **53, 54** sont séparées, par exemple, par des cales **55 (fig. 1)** ou, comme illustré à la **fig. 6**, par un cadre périphérique **56** assurant la géométrie de l'entrefer. Le cadre **56** est aménagé pour laisser le passage à l'élément de mesure **10** qui s'étend dans l'entrefer délimité entre les deux plaques **53, 54**. L'élément de mesure **10** est fixé entre deux pièces support **60** et **61** montées sur les chants des plaques. Des pièces polaires **32, 33** sont placées sur les faces externes des plaques **53, 54** au niveau des armatures **51, 52**. Les pièces polaires **32, 33** s'étendent sur une surface limitée des plaques, de manière que les circuits électroniques d'excitation et de mesure puissent être réalisés sur les plaques **53, 54**, en dehors des pièces polaires **32, 33**. Tel que cela ressort de la **fig. 6**, les pièces polaires dépassent latéralement les plaques, afin d'assurer l'interposition d'aimants **35**, de part et d'autre des chants des plaques et entre les pièces polaires **32, 33**. Le gyromètre décrit ci-dessus est obtenu par un assemblage par l'empilement des plaques et des pièces polaires et par un collage sous presse. Un tel assemblage offre l'avantage de permettre de respecter relativement facilement les conditions de parallèlisme entre les pièces polaires et les armatures.

La **Fig. 7** illustre, plus particulièrement, un perfectionnement apporté à la variante de réalisation montrée à la **Fig. 6**. Selon ce perfectionnement, l'élément de mesure **10** est monté mobile en rotation sur lui-même selon l'axe **y**. A cet effet, l'élément de mesure **10** est monté à l'intérieur d'un tube **65** réalisé en un matériau isolé électriquement. Le tube **65** est pourvu d'évents non représentés, afin d'éviter de modifier la vibration de l'élément de mesure **10** par le volume d'air déplacé. L'élément de mesure **10** est fixé au tube **65** par ses deux extrémités, par l'intermédiaire d'un matériau de scellement **66**. Le tube **65** est monté sur le cadre **56**, de manière à pouvoir être déplacé en rotation selon sa direction axiale. Une telle caractéristique offre l'avantage de permettre de compenser la déviation du plan de vibration de l'élément, cette déviation résultant de l'anisotropie de raideur des points d'ancrage de l'élément de mesure. La rotation du tube **65** et, par suite, de l'élément **10**, permet de placer ce dernier dans son plan de vibration optimum, correspondant à un offset minimum.

Avantageusement, il peut être prévu de fixer l'élément de mesure **10** au tube **65** par l'intermédiaire d'un matériau d'amortissement **67** assurant un amortissement de l'élément **10**, sa mise en tension et la non transmission des vibrations vers les divers organes constitutifs du capteur. A titre d'exemple, le matériau d'amortissement **67** peut être constitué par une résine ou un élastomère amortissant.

Dans la description qui précède, il est à noter que l'excitation est réalisée de manière magnétique, alors que la détection est de nature capacitive. Cette détection et cette excitation s'imposent par la taille macroscopique de l'élément de mesure, à savoir, par exemple, 1 à 3 cm, dans la mesure où à cette échelle, les forces magnétiques sont plus importantes que les forces électrostatiques. A une échelle millimétrique ou inférieure, il peut être prévu que les armatures **51, 52** produisent un champ d'excitation électrique, tandis que le circuit magnétique comprenant les pièces polaires **32, 33** soit utilisé pour la détection de l'effet de Coriolis apparaîssant alors dans le plan **(x, y)**, à l'aide d'une bobine appropriée embrassant le flux variable. Le système d'excitation **50** est alors du type capacitif, tandis que le système de détection **30** est du type magnétique.

L'invention n'est pas limitée aux exemples décrits et représentés, car diverses modifications peuvent y être apportées sans sortir de son cadre.

## Revendications

**1** - Capteur de mesure du type comprenant :
- au moins un élement de mesure **(10)** conducteur de l'électricité, soumis à une excitation selon un axe **(x ou z)** et destiné à subir une rotation selon un axe coplanaire **(y)** perpendiculaire à l'axe d'excitation **(x)**, de sorte que l'élément de mesure vibre dans un plan contenant lesdits axes,
- un système d'excitation **(30 ou 50)** de l'élément de mesure, selon le plan de vibration comprenant une source de courant **(31)** alimentant l'élément de mesure et au moins un couple de pièces d'excitation magnétique **(32, 33)** ou capacitive **(51, 52)** comportant des faces actives planes **(32a, 33a ou 51a, 52a)**, respectivement placées en vis-à-vis et de part et d'autre de l'élément de mesure, en s'étendant parallèlement entre-elles suivant l'axe de rotation **(y)**, un champ magnétique **(B)** ou électrique s'établissant entre les faces actives des pièces, en vue d'exciter l'élément de mesure en combinaison avec le courant qui le parcourt,
- et un système **(30 ou 50)** de détection de l'effet de la force de Coriolis s'établissant selon un axe perpendiculaire au plan de vibration et apparaissant lorsque l'élément de mesure **(10)** subit une rotation selon son axe **(y)**,

caractérisé en ce que le système de détection **(30 ou 50)** comprend, en combinaison avec les pièces d'excitation magnétique **(32, 33)** ou capacitive **(51, 52)**, au moins un couple de pièces de détection respectivement capacitive **(51, 52)** ou magnétique **(32, 33)** montées parallèlement aux pièces d'excitation, afin d'assurer la détection de la variation du champ magnétique ou électrique sous l'effet de la force de Coriolis appliquée à l'élément de mesure en vue de permettre la mesure d'une vitesse angulaire.

**2** - Capteur selon la revendication 1, caractérisé en ce que les pièces de détection **(51, 52)** sont fixées chacune sur la face active plane **(32a, 33a)** des pièces d'excitation **(32, 33)**, en étant isolées électriquement par rapport à ces faces.

**3** - Capteur selon la revendication 2, caractérisé en ce que les pièces d'excitation **(32, 33)** présentent des faces actives planes **(32a, 33a)** s'étendant parallèlement entre-elles et sur lesquelles sont montés des supports **(53, 54)** d'épaisseur constante et pourvus des pièces de détection **(51, 52)**.

**4** - Capteur selon la revendication 1, caractérisé en ce que l'élément de mesure **(10)** est monté réglable en rotation autour de son axe **(y)**.

**5** - Capteur selon la revendication 1, caractérisé en ce que l'élément de mesure **(10)** est monté à l'intérieur d'un tube **(65)** pourvu d'évents et réalisé en un matériau isolant électriquement, l'élément de mesure **(10)** étant fixé par ses deux extrémités au tube qui est monté réglable en rotation autour de son axe longitudinal.

**6** - Capteur selon la revendication 5, caractérisé en ce que l'élément de mesure **(10)** est, d'une part, fixé au tube **(65)**, par l'intermédiaire d'un matériau de scellement **(66)** et, d'autre part, amorti par un matériau d'amortissement **(67)**.

**7** - Capteur selon la revendication 1 ou 2, caractérisé en ce que les pièces d'excitation **(32, 33)** constituent des pièces polaires **(32, 33)** associées à un aiment **(35)** dont le champ est canalisé entre leurs faces actives **(32a, 33a)**, tandis que les pièces de détection **(51, 52)** forment des armatures de détection capacitive faisnt partie d'un circuit de détection capacitive du déplacement de l'émément de mesure.

**8** - Capteur selon la revendication 1 ou 2, caractérisé en ce que les pièces d'excitation **(51, 52)** constituent des armatures alimentées électriquement, tandis que les pièces polaires magnétiques faisant partie d'un circuit de détection magnétique du déplacement de l'élément de mesure.

**9** - Capteur selon la revendication 2, caractérisé en ce que les armatures **(51, 52)** sont réalisées par gravure sur un circuit imprimé **(53, 54)** qui assure l'isolation électrique entre les armatures et les pièces polaires **(32, 33)**, l'assemblage des circuits imprimés avec une pièce polaire étant obtenu par empilage et collage sous presse, après interposition de moyens de calage entre les circuits imprimés.

**10** - Capteur selon la revendication 9, caractérisé en ce que chaque circuit imprimé porte, en dehors des pièces polaires (**32, 33**), les circuits d'excitation et de détection.

**11** - Capteur selon la revendication 7, caractérisé en ce que chaque armature de détection (**51, 52**) capacitive présente un profil variable, de manière à discriminer les composantes des mouvements parallèle et perpendiculaire aux pièces polaires (**32, 33**).

**12** - Capteur selon la revendication 1 ou 2, caractérisé en ce que le système d'excitation (**30**) comporte une source de courant (**31**) placée dans la boucle de réaction d'un amplificateur (**40**) commandé par un signal représentant la vitesse de vibration de l'élément de mesure pour constituer un oscillateur calé automatiquement sur la fréquence de résonance choisie de l'élément de mesure.

**13** - Capteur selon la revendication 12, caractérisé en ce que le système d'excitation (**30**) comporte un amplificateur de commande (**45**) dont l'une de ses entrées est reliée par des résistances (**46, 47**) aux extrémités d'un ensemble formé de l'élément de mesure (**10**) placé en série avec un élément (**$10_1$**) identique à l'élément de mesure (**10**), mais non soumis au champ d'excitation, l'une des extrémités de l'ensemble étant connectée à la sortie de l'amplificateur (**45**) par une source de courant (**31**), l'autre entrée de l'amplificateur étant reliée au point commun des éléments de mesure.

FIG_1

FIG_2

FIG_3

FIG_4

FIG_5

FIG_6

61

53    54

35

33

32    S N

10

56

60

FIG_7

66

10

65

32    33

67

53    54

56

**Office européen des brevets**

# RAPPORT DE RECHERCHE EUROPEENNE

Numero de la demande

EP 93 40 2478

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | US-A-2 546 158 (M.H.JOHNSON) | 1,7,12 | G01C19/56 |
| Y | * colonne 2, ligne 57 - colonne 4, ligne 43; figures 1-5 * | 8 | |
| A,D | | 3,4 | |
| | --- | | |
| Y | US-A-3 538 774 (W.H.QUICK) * colonne 3, ligne 32 - ligne 54; figure 1 * | 8 | |
| | --- | | |
| A | GB-A-994 543 (NORTH AMERICAN AVIATION INC.) * page 1, ligne 65 - ligne 83 * * page 6, ligne 76 - ligne 80; figures 1,7 * | 2,5 | |
| | --- | | |
| A | US-A-3 504 554 (D.G.TAYLOR) * colonne 2, ligne 9 - ligne 66; figure 1 * | 1,13 | |
| | ----- | | |

| | | | DOMAINES TECHNIQUES RECHERCHES (Int.Cl.5) |
|---|---|---|---|
| | | | G01C G01P |

| Le présent rapport a été établi pour toutes les revendications | | |
|---|---|---|
| Lieu de la recherche | Date d'achèvement de la recherche | Examinateur |
| LA HAYE | 18 Janvier 1994 | HANSEN, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)